(19) Europäisches Patentamt
European Patent Office
Office européen des brevets

(11) EP 3 069 100 B1

(12) **EUROPEAN PATENT SPECIFICATION**

(45) Date of publication and mention
of the grant of the patent:
**29.08.2018 Bulletin 2018/35**

(21) Application number: **14844996.0**

(22) Date of filing: **12.11.2014**

(51) Int Cl.:
**G01B 11/25** *(2006.01)* **G06T 17/00** *(2006.01)*
**G06T 7/521** *(2017.01)* **G06T 7/55** *(2017.01)*

(86) International application number:
**PCT/US2014/065309**

(87) International publication number:
**WO 2015/073590 (21.05.2015 Gazette 2015/20)**

(54) **3D MAPPING DEVICE**

3D ABBILDUNGSSYSTEM

DISPOSITIF DE MAPPAGE 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2013 US 201361903177 P**

(43) Date of publication of application:
**21.09.2016 Bulletin 2016/38**

(73) Proprietor: **Smart Picture Technologies, Inc.
Austin TX (US)**

(72) Inventors:
• **JOVANOVICH, Dejan**
  **Austin, Texas 78720 (US)**
• **BEARDMORE, Keith**
  **Austin, Texas 78720 (US)**
• **MYLLYKOSKI, Kari**
  **Austin, Texas 78720 (US)**
• **FREEMAN, Mark O.**
  **Austin, Texas 78720 (US)**

(74) Representative: **Campabadal i Monfà, Gemma
Wilson Sonsini Goodrich & Rosati LLP
Rue Montoyer 47
1000 Bruxelles (BE)**

(56) References cited:
**WO-A1-2013/033787    WO-A2-2013/155379
US-A1- 2013 136 341**

• **KAWASAKI H ET AL: "Entire model acquisition system using handheld 3D digitizer", 3D DATA PROCESSING, VISUALIZATION AND TRANSMISSION, 2004. 3DPVT 2004. PROCEEDINGS. 2ND INTERNATIONAL SYMPOSIUM ON THESSALONIKI, GREECE 6-9 SEPT. 2004, PISCATAWAY, NJ, USA,IEEE, 6 September 2004 (2004-09-06), pages 478-485, XP010725249, DOI: 10.1109/TDPVT.2004.1335276 ISBN: 978-0-7695-2223-4**

Description

## TECHNICAL FIELD OF THE INVENTION

The present invention generally relates to optical systems, more specifically to electro-optical systems that are used to determine the camera position and pose relative to the photographed scene in order to extract correct dimensions of objects from photographic images.

## BACKGROUND OF THE INVENTION

The present invention relates generally to three-dimensional ("3D") modeling and more specifically it relates to an image data capture and more particularly, to a combination of processing systems, including a digital imaging device, an active illumination source detectible by the digital imaging device, a reference template or reference object in the scene, computer and software that generates virtual 3D model data sets for real world objects. It is commonly understood that cameras take two-dimensional ("2D") pictures of the scene presented to them. The scene typically contains 3D objects in a 3D environment but much of the 3D structure, such as size and shape of the objects or distance between objects, is lost in the 2D photographic view. The photo does not provide a way to get a 3D model of the scene. There are methods requiring multiple cameras and sophisticated processing to build 3D models of a scene, but these are not suitable for consumer devices with highly limited processing power. This invention provides a way to obtain complete 3D information about the scene using a standard camera such as those found in mobile consumer devices and with simplified processing capabilities that are compatible with those devices. The system and method using one reference template can be improved on by a system that judiciously employs multiple differently positioned reference templates. In addition to differently positioned the templates may be differently oriented. The use of multiple reference templates allows for more accurate information gathering particularly in scenes or objects requiring more viewing perspectives.

Existing methods of 3D acquisition require specialized hardware and significant computing resources to sense and extract the 3D information. Examples include time-of-flight sensors and multiple-pattern structured light projectors.

A real-time, handheld 3D model acquisition system consisting of a laser projector, a video camera and a turntable is described in the scientific paper "Entire Model Acquisition System using Handheld 3D Digitizer" of Kawasaki et al.. In this solution, the user projects a stripe of light at the 3D object by hand while rotating the object on the turntable. The projected light and LED markers attached to the laser projector and turntable are captured by the video camera. By estimating the 3D orientation of the laser projector and the turntable angle from the 2D locations of the markers, the 3D location of the surface lit by the laser can be calculated. In addition, post-processing algorithms for refining the estimated 3D data are proposed. The algoritlun not only improves the accuracy of the 3D measurement, but also achieves to decrease the number of LEDs for 3D data estimation. Therefore, it significantly improves the user's convenience in scanning the object. With the described system, users can measure an entire 3D object in real-time.

The is a need for an improved optical system for generating 3D models of 3D objects using conventional consumer electronics.

## SUMMARY OF THE INVENTION

The invention is defined in claim 1. Particular embodiments of the invention are set out in the dependent claims.

In particular, a 3D mapping device is disclosed. The 3D mapping device comprises a range pattern projector, a camera, a triangulation engine, a pose/position measuring engine, a spatial relationship engine, and a mapping engine. The range pattern projector projects a ranging pattern. The camera captures a sequence of images from a sequence of positions and poses relative to an object or a scene to be 3D mapped. The pose/position measuring engine determines the pose and position of the camera for each of said sequence of images where multiple reference templates are located somewhere in each of said images. The triangulation engine determines the distance of individual points on the object or in the scene to be 3D mapped on which the pattern projector's pattern is projected. The spatial relationship engine determines the spatial relationship of between a first pose/position sequence of images and a second pose/position sequence of images where the first and second sequence share at least one reference template in common. The mapping engine provides a dimensionally correct 3D map output of the object or the scene based on the input of the pose/positioning measuring engine output and the triangulation engine output and the spatial relationship engine for multiple pose/position sequences of images.

## BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:

| | |
|---|---|
| **Figure 1** | illustrates view of the 3D modeling system in use on a three dimensional scene with three dimensional objects; |
| **Figure 2** | illustrates an embodiment of a reference template employed in the scene illustrated in **Figure 1** ; |
| **Figure 3** | illustrates an embodiment of a reference template illumination pattern of known dimensions; |
| **Figure 4** | illustrates alternative reference template patterns; |
| **Figure 5** | illustrates a diffraction grating for an alternative to a physical reference template; |
| **Figure 6** | illustrates alternative reference template illumination patterns; |
| **Figure 7** | illustrates a ranging illumination pattern; |
| **Figure 8** | illustrates an alternative ranging illumination pattern; |
| **Figure 9** | illustrates hardware components of the 3D modeling system; |
| **Figure 10** | illustrates a camera accessory mounted on a conventional camera phone; |
| **Figure 11** | illustrates an alternative embodiment to the accessory of **Figure 10** with two image projectors; |
| **Figure 12** | illustrates the undistorted pattern of **Figure 3;** |
| **Figure 13** | illustrates the distorted active illumination pattern of **Figure 3** for a particular camera pose and position; |
| **Figure 14** | illustrates the distorted active illumination pattern of **Figure 3** for another camera pose and position; |
| **Figure 15** | illustrates the pixel mapping of the distortion ranges of the pattern illustrated in **Figure 3** for a projected reference template; |
| **Figure 16** | illustrates an embodiment of a passive reference template pattern; |
| **Figure 17** | illustrates the same scene as illustrated in **Figure 1** with the camera and projector in a different pose and position (note the lowered laser line projection); |
| **Figure 18** | is a simplified flowchart of the processing of multiple image frames into a 3D model; |
| **Figure 19** | is a simplified flowchart of the processing of removing background data from the laser ranging lines using an on-off modulated laser projector synchronized to the video frame rate; |
| **Figure 20** | is a simplified flowchart of the processing of removing background data from the laser ranging lines using a time sequenced, pose and position registered images; |
| **Figure 21** | is an example of the output of the light pattern detection subsystem and the reference template recognition subsystem; |
| **Figure 22** | is a simplified flowchart of the extraction of dimensional information from the 3D point cloud model of the image captured object; |
| **Figure 23 & Figure 24** | illustrate how the ranging laser triangulation portion of the surface point cloud 3D model is calculated; |
| **Figure 25** | illustrate how the camera pose and position is calculated from the reference template distortion data; and |
| **Figure 26** | illustrates a real world application where a dimensionally correct 3D model of a flight of stairs is created by capturing the 3D data using an embodiment of the system described herein; |
| **Figure 27** | illustrates an embodiment where multiple templates are deployed on a single large surface(s); |
| **Figure 28** | illustrates image scanning from multiple viewpoints; |
| **Figure 29** | illustrates an embodiment where multiple templates are employed on multiple proximate surfaces; |
| **Figure 30** | illustrates image scanning from multiple viewpoints; |
| **Figure 31** | is a simplified flowchart using multiple templates in order to extract dimensional information from the 3D point cloud model of the image captured object; and |
| **Figure 32** | illustrates a embodiment of using a single 4-fold rotational symmetry pattern to gather 3D cloud data from which dimensional data can be extracted. |

## DETAILED DESCRIPTION OF THE INVENTION

Preferred embodiments of the present invention are illustrated in the **FIGURES,** like numerals being used to refer to like and corresponding parts of the various drawings.

The present invention generally relates to an improved optical system for creating a virtual 3D mapping of the surface of three-dimensional ("3D") objects employing an ordinary digital camera such as is common in mobile consumer devices such as cell phones, smart phones, tablets, laptops or any other portable device in combination with a consumer light projector engine (e.g. laser line generator) which projects a single simple light pattern, such as a single straight line.

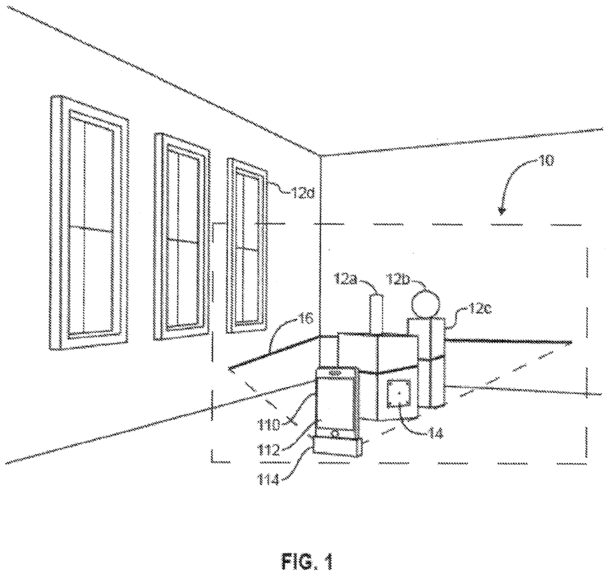

**Figure 1** illustrates an embodiment of such a 3D modeling system **110** in its operation environment **10** with an assortment of 3D objects such as cylindrical object **12a,** a ball **12b** on a pedestal **12c** in a room **12d** to be captured/modeled. A known reference object or template **14** with known dimensions is placed in the scene **10.** As described further below, the position and pose of a camera **112** and a projector **114** of the 3D modeling device **110** are calculated from distortions of the known relative dimensions of the reference template/object **14** in multiple images in a sequence of captured images. The relative registration between all images in the sequence is also determined from this captured image data of the reference template/known object **14.** Surface point range data is extracted from the image using the camera pose and position and the projected pattern image **16** generated by the light pattern projector **114** incorporated in or attached to the consumer mobile camera computing device **112** as described in greater detail below.

The system also extracts dimensional information of the objects in the imaged scene and a 3D model of the scene from images of the scene taken from a sequence camera poses and positions about and around the objects of interest.

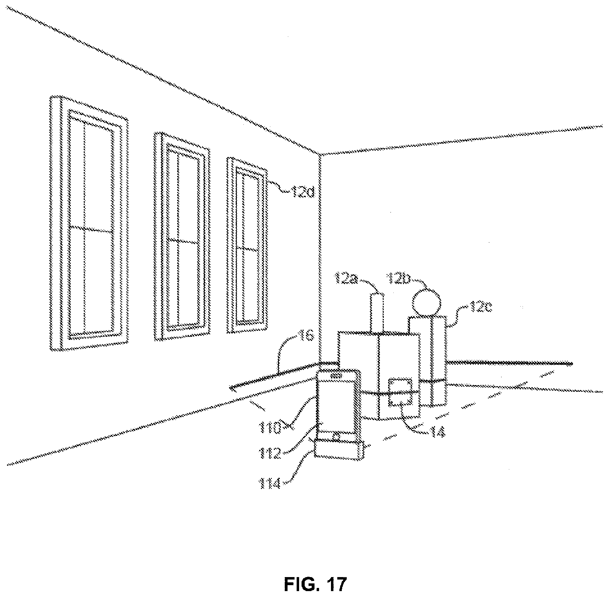

**Figure 17** illustrates the same scene **10** with the camera **112** and projector **114** of the 3D modeler not shown. In order to get a 3D model of the objects, the camera pose and position is changed as the camera is moved around and about the object of interest capturing a sequence of images as the laser line **16** (projected light ranging pattern) is scanned over the various surfaces of the object of interest while maintaining at least one reference template **14** in the field of view of the camera **112.**

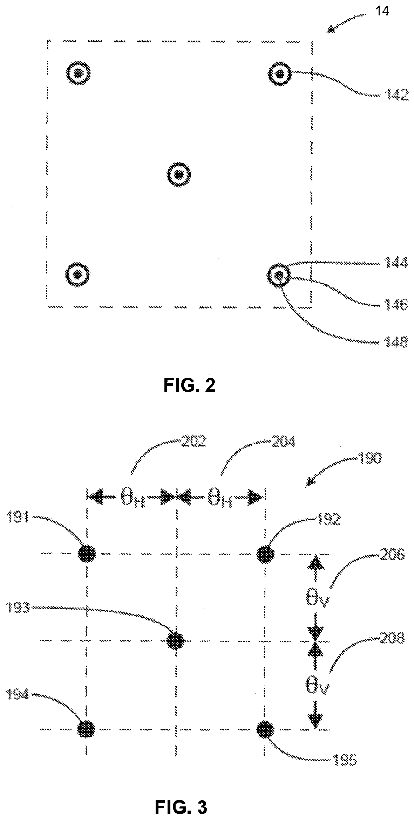

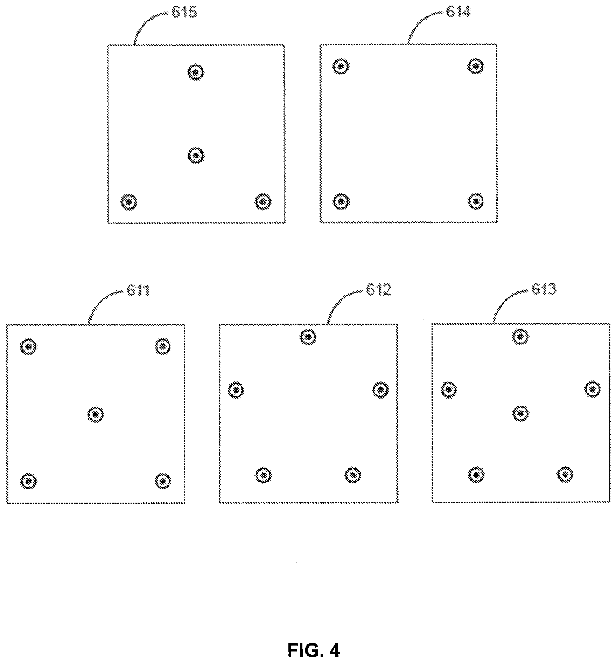

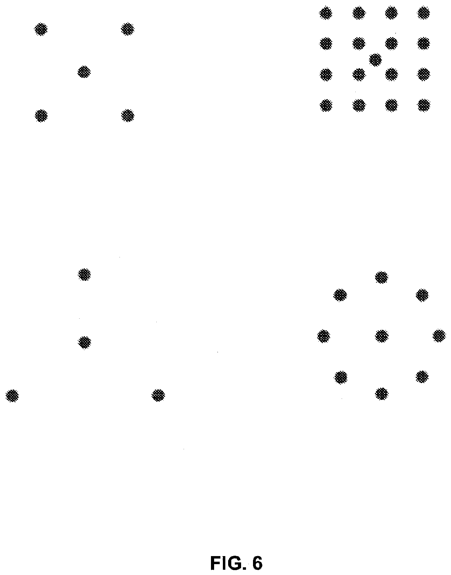

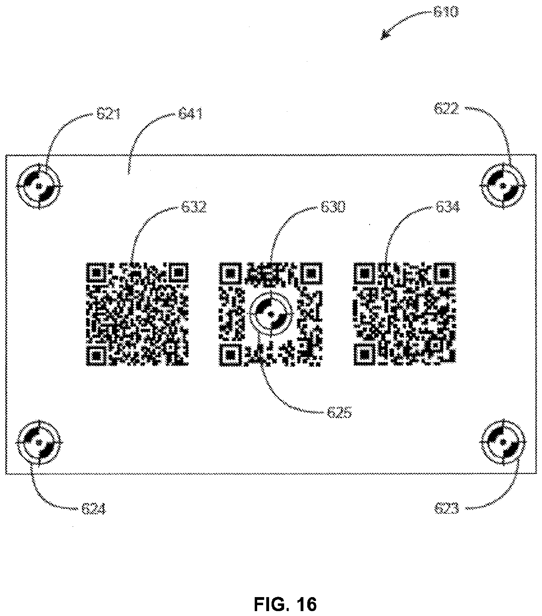

Various embodiments of the reference template or reference template pattern are illustrated in **Figure 2, Figure 3** several in **Figure 4,** several more in **Figure 6,** and another embodiment in **Figure 16. Figure 2** illustrates one preferred embodiment of the known reference object/template **14.** This embodiment employs a pattern of 5 points **142** in a configuration that closely resembles the dot pattern on a typical die in a pair of dice. It could be smaller than a die or larger depending on the geometries of the framing of the camera and the object. For normal consumer mobile device camera use, the inventors have used a template where the general scope of distances of the dots in the pattern are approximately 10.16 cm (4 inches) apart in the x and y coordinate take up a good portion of a regular A4 or 8.5 x 11 sheet of paper.

As previously mentioned, **Figure 2** illustrates an embodiment of a known reference object or template. This pattern is used for determining the camera's position and pose relative to the object imaged such as the objects **12a**, **12b**, 12**c,** or **12d** in **Figure 1. Figure 3** illustrates the analogous reference template pattern as it would be using an active projected reference template rather than a passive fixed template. In this case, the angles between the reference template fiducials are known rather than the absolute distance between the fiducials as in the case of a passive reference template. The pattern generated is the five points **191, 192, 193, 194, 195** illustrated in **Figure 3.** The ratios and distances will vary. If the size of the pattern changes based on distance between the object and the camera, in one embodiment, the design described above: the $\theta_V$ **206** and **208** and $\theta_H$ **202** and **204** values are 15°. In another design these distances were 11°. As described below, the camera pose and position can be determined/calculated from variations in these distances and the ratios between the distances.

Note that in some embodiments, the pattern is of a series of simple dots. In others, it is a series of more complicated patterns such as the targets in **Figure 2** with a bulls eye **148** an inner ring **146** and outer ring **144** in alternating or offsetting colors or shading. An even-more-complicated pattern is illustrated in **Figure 16.** Applicants have found the dots **621** illustrated in **Figure 16** to be preferable as easier to locate programmatically. In any case, the objective of the pattern is to make the point pattern easier to identify and pinpoint more accurately in a image taken by the camera sensor.

**Figure 16** illustrates an embodiment of the image-based dimensioning method and system employing a passive reference template placed within the scene containing an object to be modeled. The embodiment of the passive reference template **610** illustrated in **Figure 16** is a pattern printed on a label **641** which is attached proximate to the object to be modeled (not shown). The pattern is comprised of the five point patterns **621, 622, 623, 624** and **625.** Other point patterns are possible and other configurations of point are also possible.

**Figure 16** also illustrates an embodiment with other parts - the three UID code patterns **630, 632,** and **634** (or similar binary code patterns). In this embodiment, the leftmost UID **632** illustrates a UID code pattern whereby an appropriate decoder will direct the user's electronic device to a location where the image-based measuring system software can be downloaded to the user's electronic device. The UID **634** on the rightmost side, when decoded by the user, will notify the user of special promotions for a sponsor or the store, possibly related to the object on which the reference template is affixed or placed on the object to be imaged, characterized and ultimately dimensioned. The center UID **630** in the embodiment shown has a reference template fiducial **625** incorporated into the UID code image **630.**

In the embodiment shown, the UID may provide the user and camera other information about the image or related images. For example, the UID may provide the user or camera with information about the product, such as pantone colors, weight, manufacturer, model number variations available etc.

In alternative embodiments, rather than a stationary reference template in the scene proximate to the object to be modeled, there may be an actively projected pattern which is stationary. In still other embodiments, the projected image might change. In any case, what is important to this invention is that from the appearance of the stationary or moving pattern projections, the cameras pose and position is determined.

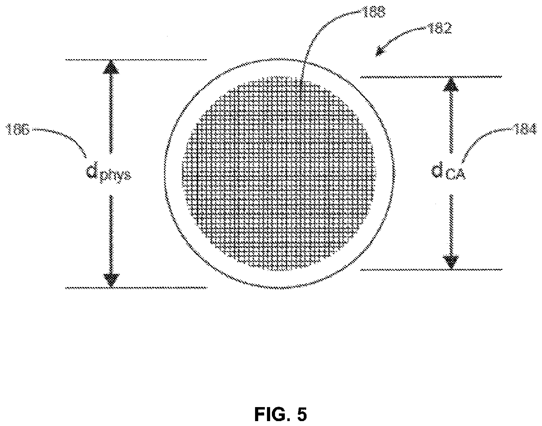

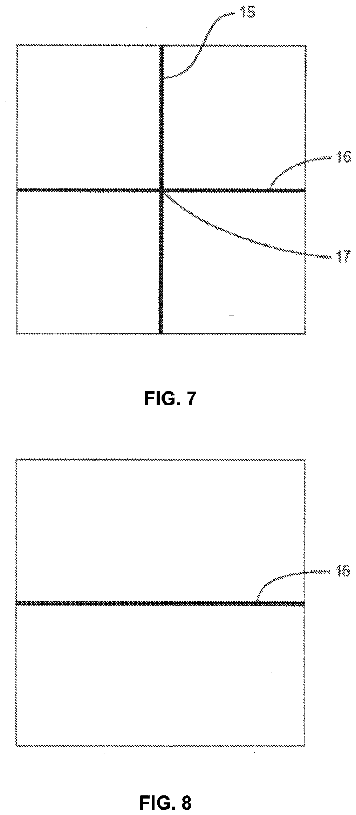

**Figure 5** illustrates in greater detail the creation of a projected reference template pattern. In a typical embodiment of the systems described herein, the pattern is generated by placing a diffraction grating in front of a laser diode. **Figure 5** illustrates a Diffractive Optical Element, (DOE) for generating the desired pattern. In an embodiment of the active reference template system **118,** the DOE **182** has an active diffraction area **188** diameter of about 5mm, a physical size of about 7mm. And a thickness between 0.5 and 1mm. The DOE is placed before a red laser diode with a nominal wavelength of 635nm with an expected range of 630-640nm. The pattern generated could be one of the reference template patterns discussed above for determining the pose and position of the camera or it could be one of the patterns described below and illustrated in **Figure 7** and/or **Figure 8** for creating the laser ranging pattern used for surface modeling of the object.

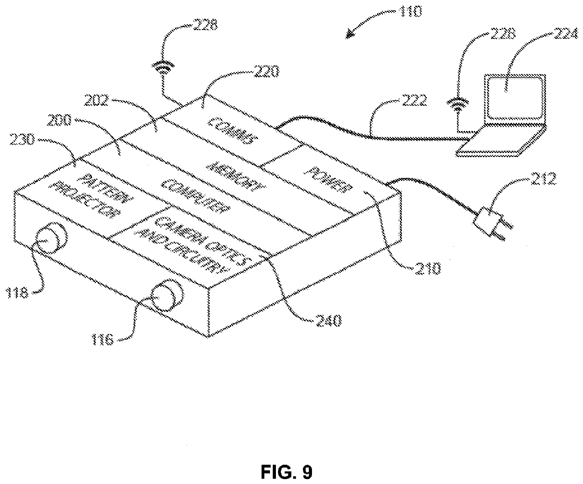

**Figure 9** illustrates primary major hardware components of the 3D surface modeler **110.** For simplicity the figure does not include much of the supporting infrastructure for these components. For the camera an ordinary digital camera **240** such as is common in mobile consumer devices such as cell phones, smart phones, tablets, laptops or any other portable device in combination with a consumer light projector engine **230** (e.g. laser line generator) which projects a single simple light pattern, such as a single straight line. The many projection patterns are possible, for simplicity of computation, the inventors have found that the two preferred patterns are either a straight line **16** (as illustrated in **Figure 1, Figure 8** and **Figure 17**) which may be horizontal or vertical, or a perpendicular cross-hair **17** pattern with two lines, **15** and **16,** oriented at 90 degrees to each other (as illustrated in Figure 7).

A known reference object or template as described above with known dimensions is placed in the scene to be captured/modeled as described above. The position and pose of the camera and projector arc calculated from distortions of the known dimensions of the reference template/object in multiple images in a sequence of captured images. The pose of the camera is determined by mapping the distorted positions of the reference template fiducial s in the camera image into the known undistorted positions of the fiducials in the actual reference template. The relative registration between all images in the sequence is also determined from this captured image data of the reference template/known object.

As stated above, cameras take 2D pictures of the scene presented to them. The scene contains 3D objects in a 3D environment but much of the 3D structure, such as size and shape of the objects or distance between objects, is lost in the 2D photographic view. The photo does not provide a way to get a complete 3D model of the scene. There are prior art methods requiring multiple cameras and sophisticated processing to build 3D models of a scene, but these are not suitable for consumer devices with highly limited processing power. This invention provides a way to obtain complete 3D information about the scene using a standard camera such as those found in mobile consumer devices and with simplified processing requirements that are compatible with those devices. The invention claimed here solves this problem.

This 3D modeler 110 utilize a known reference object with certain properties which is added to the scene prior to photographing. With this, simple processing can be applied to the series of images to build a complete 3D model of the scene. Or, if just particular information is needed, such as the dimensions or surface area of some object in the scene, this invention provides a method to obtain this information with even further reduced processing requirements.

The combination and processing architecture differs from what currently exists. The processing flows of the architecture fit the processing power of today's consumer electronic user's devices employing geometrical measurements in an environment that has low processing power (like a mobile consumer device) while at the same time allowing for a complete 3D model where processing power is not limited.

With their requirements for specialized hardware and high computing power, existing 3D acquisition systems are not easily adaptable to today's mobile consumer devices.

As described below, the described 3D modeler uses the standard camera 240 and computing resources (computer with processor 200, memory 202, power typically including a battery and means 212 for connecting to a power source 210 and some sort of communications 222, 220, 228 for connecting to a computer 224 or wireless or wired network typically available on consumer mobile devices such as smart phones. The light projector 230 (e.g. laser line generator) is attached as an accessory to the mobile device. Processing requirements are significantly reduced by including a known object or reference template in the scene to be captured. The use of the known object in each image in the sequence of captured images allows for quick position and pose of the camera and light projector, as well as providing the proper registration between all images in the sequence.

Also, it can produce 3D models, physical representations of the 3D object or scene, including machine parts, artistic sculptures, toys, 3D memos of a configuration and with CNC and 3D printing capabilities added, can manufacture 3D copies of many 3D objects (objects where all of the objects characteristics can be determined from its camera visible surfaces).

The camera **240** is optical data capture device, with the output being preferably having multiple color fields in a pattern or array, and is commonly known as a digital camera. The camera function is to capture the color image data within a scene, including the active illumination data. In other embodiments a black and white camera would work, almost as well, as well, or in some cases better than a color camera. In some embodiments, it may be desirable to employ an optical or digital filter (not shown) on the camera that enhances the image projected by the active illumination device for the optical data capture device.

The camera **240** is preferably a digital device that directly records and stores photographic images in digital form. Capture is usually accomplished by use of camera optics (not shown) which capture incoming light and a photosensor (not shown), which transforms the light intensity and frequency into colors. The photosensors are typically constructed in an array, that allows for multiple individual pixels to be generated, with each pixel having a unique area of light capture. The data from the multiple array of photosensors is then stored as an image. These stored images can be uploaded to a computer immediately, stored in the camera, or stored in a memory module.

The camera may be a digital camera, that stores images to memory, that transmits images, or otherwise makes image data available to a computing device. In some embodiments, the camera shares a housing with the computing device. In some embodiments, the camera includes a computer that performs preprocessing of data to generate and imbed information about the image that can later be used by the onboard computer and/or an external computer to which the image data is transmitted or otherwise made available.

The projector **314** may be an active illumination device. In several embodiments it is an optical radiation emission device. The emitted radiation shall have some form of beam focusing to enable precision beam emission - such as light beams generated by a laser. The function is to emit a beam, or series of beams at a specific color and angle relative to the camera element. The active illumination has fixed geometric properties relative to the field of view of the camera.

However, in other embodiments, the active illumination can be any source that can generates a beam, or series of beams that can be captured with the camera. Provided that the source can produce a fixed illumination pattern, that once manufactured, installed and calibrated does not alter, move, or change geometry in any way. The fixed pattern of the illumination may be a random or fixed geometric pattern that is of known and predefined structure. The illumination pattern does not need to be visible to the naked eye provided that it can be captured by the camera for the software to detect its location in the image as further described below.

The illumination pattern generated by the active illumination device **230** has been previously discussed and the preferred embodiments illustrated in **Figure 7** or **Figure 8.**

The illumination source **118** may utilize a lens system to allow for precision beam focus and guidance, a diffraction grating, beam splitter, or some other beam separation tool, for generation of multi path beams. A laser is a device that emits light (electromagnetic radiation) through a process of optical amplification based on the stimulated emission of photons. The emitted laser light is notable for its high degree of spatial and temporal coherence, unattainable using other technologies. A focused LED, halogen, or other radiation source may be utilized as the active illumination source.

The camera 240 may also include cameras with additional functionality. For example, the ability to refocus the image using post-processing, or the ability to capture images in other parts of the spectrum (e.g. infra-red) in addition to its basic visible light functionality.

Light pattern projector 230. One embodiment of this invention uses a visible laser similar to those used in laser pointers followed by an optical element that spreads the laser light into the desired pattern. The laser wavelength should be in the spectrum that can be detected by the standard digital camera 240. If the camera used in conjunction with the light pattern projector is able to detect light outside the visible spectrum, then the light pattern projector can operate in any wavelength of light that the camera is able to detect. However, it is still preferable for the user to be able to see the laser pattern on the object and not have to look at the camera display to see the surfaces that the laser is scanning. The light-spreading element could be a DOE (diffractive optical element) or any other type of optical clement such as refractive or reflective that produces the desired pattern. The desired pattern in the first embodiment is a single line of laser light. As previously described, in an alternative embodiment, the pattern is preferably a line or a pair of crossing lines; however other embodiments may use other patterns. Additionally it is not strictly necessary for the projector to use a laser with a diffraction grating. Any light projector technology could be used including incandescent, LED, arc lamp, etc, which can be used in a light engine that emulates the desired laser light pattern and is detectable by the camera sensor.

In the embodiment illustrated in **Figure 1,** the known reference object or template is physically placed in the scene. There is great flexibility on the design of this reference template. It should be largely a 2D pattern, although 3D reference objects/templates are also acceptable. In one embodiment of this invention, a pattern of five bulls-eyes is used arranged as one bulls-eye at each corner of a square and the fifth bulls-eye at the center of the square. The essential requirement is that the 3D sensing system has knowledge of the exact geometry of the reference object. In processing, the system will recognize and identify key features (fiducials) of the reference object in each image within the sequence of captured images. Therefore, it is advantageous that the reference object be chosen for providing speed and ease of recognition. In another embodiment, the physical reference template may be composed of a pattern of LEDs (light-emitting diodes) or any other type of light source to make the key features of the reference template more easily recognized in low ambient light situations. The light-emitting reference template may also enable the use of shorter exposure times by the camera - thereby making the light-emitting reference template and projected light pattern easier to distinguish from the comparatively dimmer background. For ease of distinguishing the light emitting reference template from the projected light pattern, different wavelengths or colors may be chosen for the light-emitting reference template than those used in the light pattern projector.

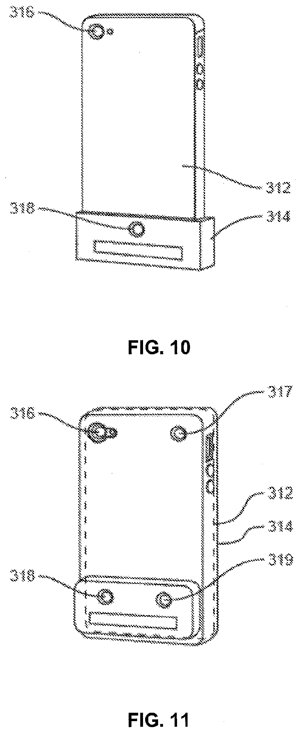

**Figure 11** illustrates another embodiment of this invention which uses first and second light-emitting projectors **318** and **319** in this case the second projector projects the reference template.

In an alternative embodiment a single light pattern projector will be used to serve both the template function and pattern function. In further embodiments the single projector will flash between a ranging pattern and a reference template from which the pose and position and the surface ranging can be gathered as discussed below.

Data processing system **200, 202** - This is a computing and processing device, most commonly the computing processor associated with a mobile consumer device. A series of processing steps are implemented in software to assemble the 3D model from the image sequence using the detected light patterns and reference template key features (fiducials).

**Figure 9** illustrates the components in a single housing. **Figure 1** and **Figure 10** and **Figure 11** illustrate alternative relationships between the hardware components. In the later embodiments, the light pattern projector is attached to the device that houses the digital camera and the data processing system , which also contains the light pattern detection system and the reference template recognition system which would typically be manifest as software applications saved in memory.

**Figure 10** shows the ranging projector **318** on an accessory **314** mounted to a mobile device **312** with a digital camera **316. Figure 11** illustrates an embodiment that employs multiple cameras **316** and **317** and multiple projectors **318** and **319.** Tn the embodiment shown some of this functionality is incorporated by accessory **314** which is a case for the mobile device **312.**

In the embodiment shown, all of the processing is handled by the CPU (not shown) in the on-board computer **200.** However in other embodiments the processing tasks may be partially or totally performed by firmware programmed processors. In other embodiments, the onboard processors may perform some tasks and outside processors may perform other tasks. For example, the onboard processors may identify the locations of illumination pattern in the picture. In other embodiments the collected data may be transmitted to another computer(s)or data processor(s) for processing.

**Calibration System.** This is an item which is used to provide a sensor system with ground truth information. It provides the correct relationship between the position on the camera's image sensor array of the projected light from the light ranging pattern projector and the range of the object point that is illuminated by the projected light. Integration and processing of calibration data and operation data forms corrected output data.

One embodiment of a suitable calibration system employs a specific physical item (Image board) that is of a predetermined size, and shape, which has a specifically patterned or textured surface, and known geometric properties. The Light Ranging Pattern Projector emits radiation in a known pattern with fixed geometric properties, upon the Image Board or upon a scene that contains the Image Board. In conjunction with information provided by an optional Distance Tool, with multiple pose and distance configurations, a Calibration map is processed and defined for the imaging system.

The calibration board may be a flat surface containing a superimposed image, a complex manifold surface, containing a superimposed image, an image that is displayed upon via a computer monitor, television, or other image projection device or a physical object that has a pattern of features or physical attributes with known geometric properties. The calibration board may be any item that has unique geometry or textured surface that has a matching digital model.

In another embodiment, only the Distance Tool is used. The camera and active illumination system is positioned perpendicular to the plane surface to be measured, or in other words, it is positioned to directly photograph an orthographic image. The Distance Tool is then used to provide the ground truth range to the surface. Data is taken in this manner for multiple distances from the surface and a Calibration Map is compiled.

**Connections of Main Elements and Sub-Elements of Invention.** In the image capture system, the Camcra(s) must be mechanically linked to the Active Illumination device(s). In the embodiment **110** illustrated in **Figure 1** the mechanical linkage is based on both the camera **112** and active illumination device **114** being physically attached to each other. In addition to being mechanically linked, it is preferable though not essential that the Camera and Active Illumination devices are Electrically linked.

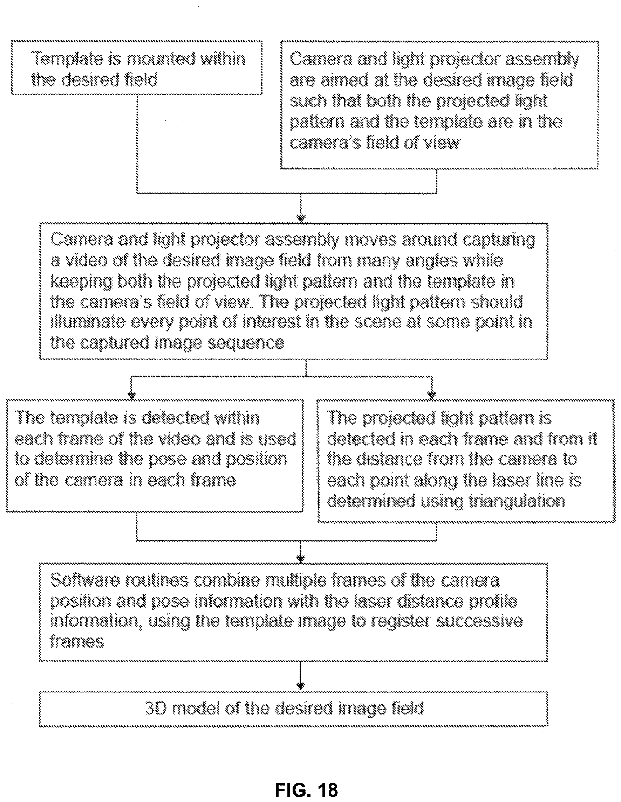

**How the Invention Works. Figure 17** provides a review of the forgoing description of the hardware for a discussion of how the hardware is employed to generate a 3D surface model of an object. The drawing is similar to figure 1 but shows a different pose and position of the camera (more angled down). The operation of the invention is diagrammed in the flow chart included as **Figure 18** which provides a simplified flow diagram for processing the multiple image frames into a single 3D model.

At least one reference template is placed in the scene keeping in mind that at least one reference template needs to be in view in every image for the image to provide useful information for the 3D Model. A standard digital camera such as the camera in a smart phone is used together with an auxiliary light pattern projector affixed to the camera to capture a stream of images that will be processed into a 3D model of the scene.

A known pattern is projected onto the scene by the light projector and the attached camera captures a sequence of images or stream of video as the camera/projector assembly is moved around. Each image in the sequence contains the reference template, projected pattern, and the object or scene of interest from a series of different viewpoints. In a first embodiment, the reference object is separate from the projected light pattern. In a second embodiment, the projected light pattern serves as the reference template and no further reference template is needed.

The reference template is used to establish a common and known reference for all views taken of the unknown scene or object. The pose and position of the camera and light pattern projector are determined with minimal processing from the view of the reference template in each image frame. The way the algorithm works is that the key features (fiducials) in the reference template produce image/world correspondences which allows a closed form solution of the homography (plane->plane perspective transformation) using the DLT algorithm (direct linear transform). For the camera pose, an algorithm is used to obtain the camera-target translation (pose) vector and a rotation matrix which determines the pose vector between the camera center and a reference fiducial mark. Having this pose vector in every image frame is key for assembling the 3D model.

In a first embodiment, the projected light pattern processing uses standard triangulation at each point in the detected light pattern on the camera sensor to determine the distance (depth) of that point from the camera center (after calibration) which gives the z distance from the camera center. The camera parameters are then used to calculate x- and y- components which creates a full vector from the camera to each detected laser point in the pattern.

To complete the 3D model in the first embodiment, we take the vector from each camera center to each projected light point in the scene and subtract off the pose vector from the camera center to the reference fiducial. This keeps the relative 3D position vector produced during cach frame aligned to all others.

In a second embodiment, the projected light pattern serves as the reference template. The camera and attached light pattern projector moves around the scene capturing a sequence of images containing the projected reference template and the scene of interest. This embodiment uses a scale defining method based on the projected reference template in combination with real time structure from motion (RTSLM) or synchronized localization and mapping (SLAM) or similar 3D structure from motion (SFM) approach to define scale in a dense 3D image. As before, the pose and position of the camera is determined with minimal processing from the view of the reference template in each image frame. This enables the detailed measurement across the entire 3D model as calibrated from the scale defining method.

In a third embodiment, a physical reference template is placed into the scene as in the first embodiment, and there is no projected light pattern. The camera moves around the scene capturing a sequence of images containing the reference template and the scene of interest. The 3D model is created using in the same basic manner as the second embodiment, namely, real time structure from motion (RTSLM) or synchronized localization and mapping (SLAM) or similar 3D structure from motion (SFM) approach to define scale in a dense 3D image. As before, the pose and position of the camera is determined with minimal processing from the view of the reference template in each image frame.

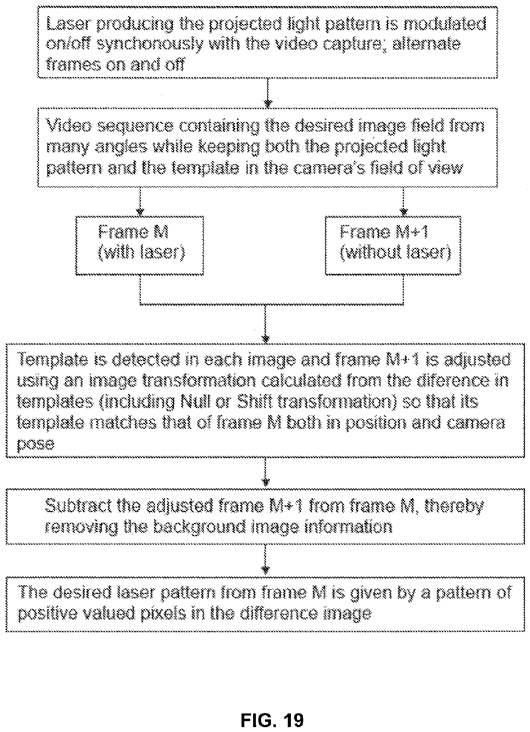

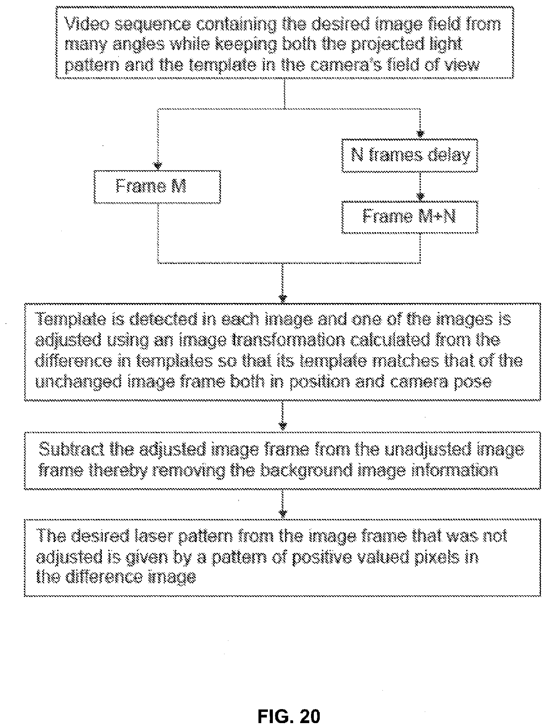

The light pattern detection subsystem can often be as simple as applying a threshold to the sequence of images to expose the brighter projected light pattern from the ambient background. **Figure 19** and **Figure 20** show two methods associated with this invention for detecting the projected light pattern when the ambient illumination is bright enough that simple image thresholding is insufficient to reliably detect the projected pattern.

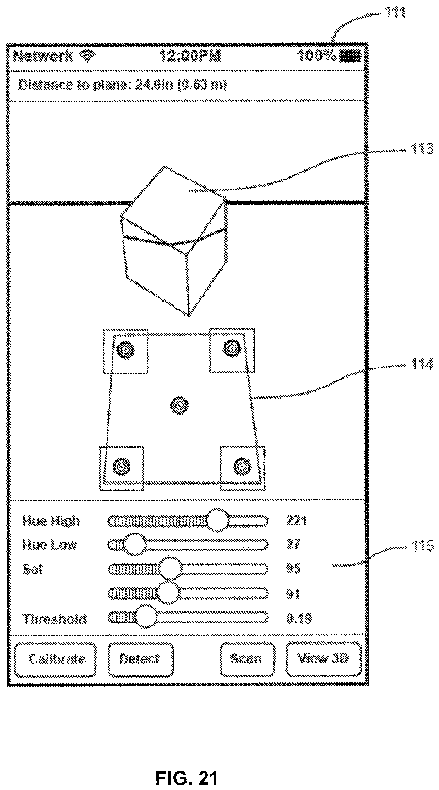

**Figure 21** shows an example of the display output 111 of the light pattern detection subsystem and the reference template recognition subsystem. Note this image shows the object modeled 113 the reference template 114 and the image control parameters 115.

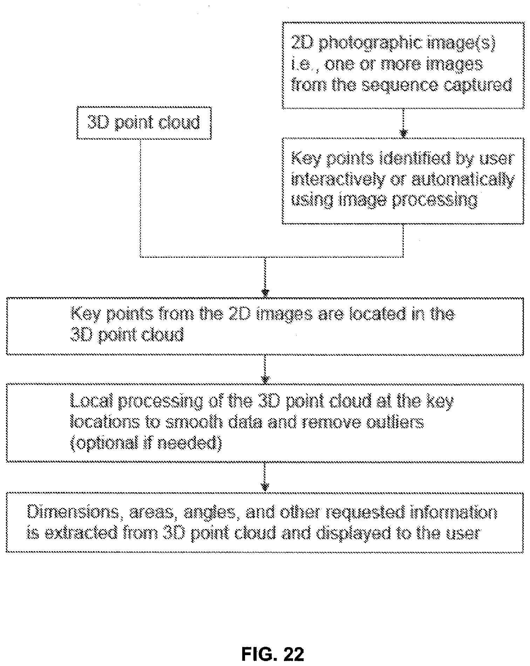

**Figure 22** describes one processing flow associated with this invention whereby the 3D information captured as described above is used to provide dimensions and other simple geometric properties of the 3D scene (such as area and angles) with minimal post-processing.

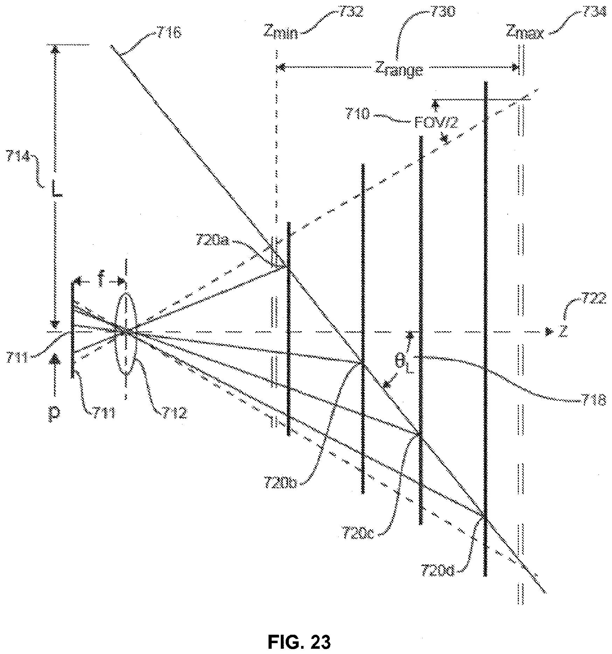

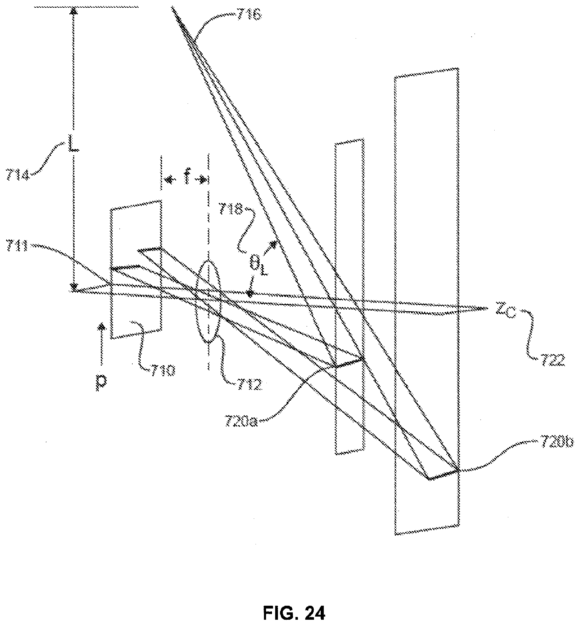

**Figure 23** illustrates the geometry for the laser range triangulation for a point of the projected laser pattern. The laser and the camera are mounted in a fixed arrangement with distance *L* **714** between the center of the camera's field of view **711** and the laser and an angle of $\theta_L$ **718** between the center axis *z* **722** of the camera field of view and the laser **716**. Note that the laser beam **716** shown in this figure represents one point of the projected laser line, i.e., it is a cross-section view of the system and the projected laser line is perpendicular to the plane of the figure. For the laser-camera angle $\theta_L$ **718** shown in **Figure 24,** as the laser is reflected from points more distant *Z* from the camera, the image of the laser spot moves up on the image sensor **710**. The optics (camera lens system **712**) reverses the image presented on the camera sensor array **710**. For surfaces of four different distances from the camera, the reflection points are illustrated at **720a, 720b, 720c** and **720d.** Tracing the reflection lines back through the camera lens to the camera sensor illustrates how near points are low and far points are high on the camera sensor. The pixel position as a function of range is subject to the following formula:

$$p(z) = f\frac{L}{z} - f\tan\theta_L$$

The functional range of the triangulation function $z_{range}$ 730 lies between the $z$ values at which the reflected lines falls off of the camera sensor at the bottom $z_{min}$ 732 and at the top $z_{max}$ 734. The range decreases with the increase of $L$ and/or the increase of $\theta_L$ and depends on the desired choice for $z_{max}$. The accuracy is proportional -- it increases linearly with $L$ and drops off as a function of $1/z^2$:

$$\left|\frac{dp}{dz}\right| = \frac{fL}{z^2}$$

Using this known accuracy dependency, the weighting of point data collected at higher accuracy geometry can be given greater weight than information gathered at lower accuracy geometries.

**Figure 24** shows more of a perspective view of the geometry of **Figure 23.** It should be appreciated that each point along the laser pattern is treated individually. In the illustration there are two flat surfaces resulting in two line segments. For more complicated shapes and/or more complicated laser patterns, rather than segments there will be a more complicated curve where each point gives range to its respective reflecting point on the 3D object in the camera's coordinate frame.

In one embodiment, the point selection along the laser line is determined once the reference template fiducial markers and laser point positions are independently detected for a given frame n. The algorithm proceeds with 3D scene assembly for that frame. This first step involves computing the camera pose relative to a specific point on the reference template, typically the upper left fiducial marker. For this a general perspective n-point (PnP) algorithm configured for 4 world-image point correspondences is suitable. This subsequently provides the camera pose in the form of the rotation matrix ($R_n$) and translation vector ($\vec{t}_n$) in real world coordinates $\vec{X}_{nW}$ (e.g. measured in feet, meters, etc). For the laser points, a standard fixed baseline triangulation calculation is used as described above. With the appropriate pre-calibration, this gives us the position of each laser pixel along the line in camera coordinates $\vec{X}_{nC}$ (measured in feet, meters, etc). At this point we can proceed to calculate the 3D scene contributions for the frame using the following equation:

$$\vec{X}_{nW} = R_n^{-1}\left[\vec{X}_{nc} - \vec{t}_n\right]$$

As the scene is scanned with the laser and the world points are accumulated for successive frames, the complete set of world points $\vec{X}_{nW}$ maps out a 3D point cloud representing the scanned scene. In principle there are no restrictions on camera orientation provided a reference template can be detected and registered in each frame. And, where more than one reference template is used, then there must be at least one frame in the video sequence showing each pair of adjacent reference templates.

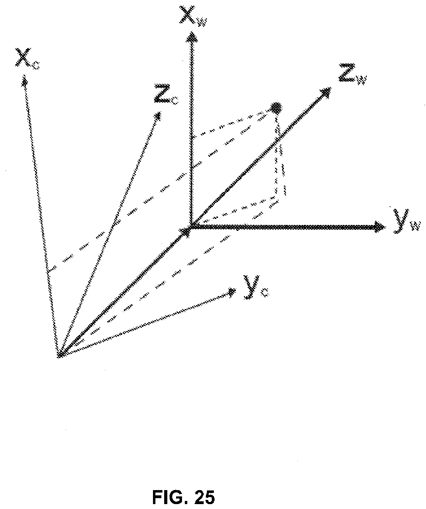

**Figure 25** illustrates how the camera pose and position information is calculated from the image data. The camera coordinates change with each image as the camera is moved. The is illustrated by the camera coordinate axes $x_c$, $z_c$ and $y_c$. The world coordinates axes are represented by $x_w$, $z_w$ and $y_w$. The general matrix form of the world coordinate to camera coordinate transformation can be expressed as follows:

$$\begin{bmatrix} x_C \\ y_C \\ z_C \\ 1 \end{bmatrix} = \begin{bmatrix} r_{11} & r_{12} & r_{13} & t_x \\ r_{21} & r_{22} & r_{23} & t_y \\ r_{31} & r_{32} & r_{33} & t_z \\ 0 & 0 & 0 & 1 \end{bmatrix} \begin{bmatrix} x_W \\ y_W \\ z_W \\ 1 \end{bmatrix}$$

$$= \begin{bmatrix} \vec{R} & \vec{t} \\ \vec{0}^T & 1 \end{bmatrix} \begin{bmatrix} \vec{x}_W \\ 1 \end{bmatrix}$$

where w indicates world coordinates, c indicates camera coordinates, $r_{nw}$ are the rotation coefficients represented by the submatrix $\vec{R}$ that rotates the world coordinate frame to be parallel to the camera coordinate frame and where $t$ is the translation coefficients that translate the origin of the world system to the camera system. The world coordinates never change, the camera coordinates change as the camera is moved. The reference template has at least four reference points for which the world coordinates are known. Once the transformation matrix is known, the points acquired in each image with local camera coordinates are transformed into global world coordinates using a simple matrix operation. In this way the 3D point cloud is successively built up as the points are added from different camera and laser pattern positions.

The matrix below illustrates how the matrix can be simplified when the reference template consists of fiducials that all lie in a single plane. With no loss of generality, the plane of the reference template can be chosen as the plane where $z_w = 0$. Then the previous matrix representation becomes the following:

$$\begin{bmatrix} x_C \\ y_C \\ z_C \\ 1 \end{bmatrix} = \begin{bmatrix} r_{11} & r_{12} & arb & t_x \\ r_{21} & r_{22} & arb & t_y \\ r_{31} & r_{32} & arb & t_z \\ 0 & 0 & 0 & 1 \end{bmatrix} \begin{bmatrix} x_W \\ y_W \\ 0 \\ 1 \end{bmatrix}$$

where *arb* indicates any arbitrary number can be used in the matrix because it will be multiplied by zero in the matrix equation and therefore has no effect on the result. In terms of the degrees of freedom in the transformation, there are now only 9 degrees of freedom ("DOF") rather than 12. Furthermore, since the relative scale of the two coordinate sets is arbitrary, all coefficients can be multiplied by any non-zero constant without affecting the transformation. As a result, the DOF can effectively be reduced to 8 for fully characterizing the pose of the camera for transformational purposes. A reference template with 4 or more coplanar points provides the necessary 8 DOF using the 4 point locations captured in the camera image together with *a priori* knowledge of the reference points in world coordinates.

Accuracy of the pose vector may be improved by including additional fiducial markers in the template (>4). In this way, the additional fiducials may be used to test the alignment accuracy and trigger a 2nd tier re-calibration if necessary. Another embodiment uses the additional fiducials to drive an over-fit Homography based on least squares, least median, random sample consensus,etc. algorithms. Such an approach would minimize error due to one/several poorly detected fiducial markers while broadening the usable range and detection angle and thus increasing robustness.

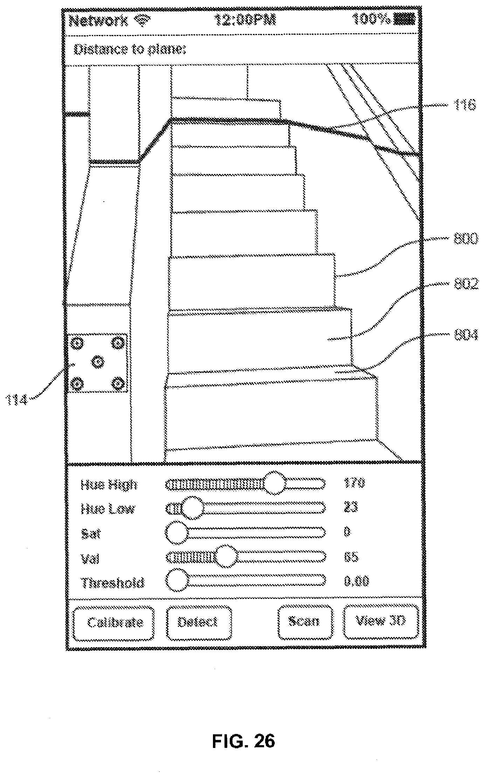

Finally, **Figure 26** illustrates another application for the 3D surface modeling. A reference template 114 is placed on the railing of a staircase.**800**. The camera films while the user scans the scene with the laser pattern **116** up and down the staircase **800** over its risers **802** and treads **804.** From the point cloud model, the user is able to identify the key parts of the stairs and calculate the area of the risers and treads for the purpose of purchasing material such as tile or carpeting for covering the stairs.

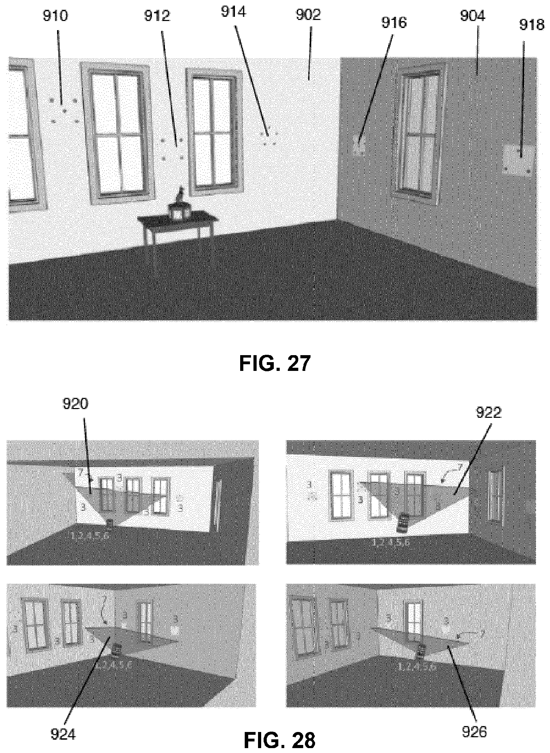

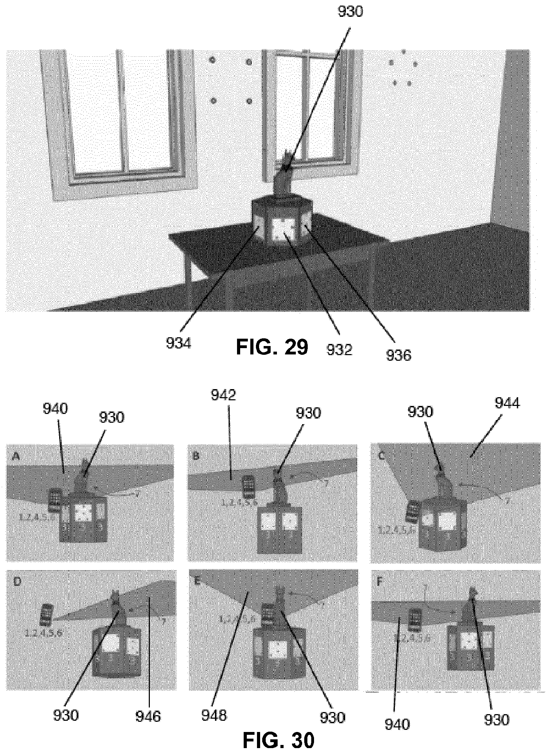

**Figure 27** illustrates a further embodiment where the scene may be too large for a single scan either because the camera viewing angle is not wide enough or the light pattern is not wide enough. In many 3D environments, it is not possible for the camera to see the reference template from every position it moves to in order to capture the complete desired 3D information. For example, in a large 3D environment, only part of the scene is in the camera's field of view at any given time. Another example is when a single view can not capture all sides of an object. See **Figure 29**. A third example is where the reference template is occluded or so distorted so as to be of limited accuracy See **Figure 27** and/or **Figure 29.** These cases can be handled through the use of multiple reference templates where each reference template is used for a portion of the data capture image sequence, and the image sequence portions using different of the multiple reference templates are merged into a single 3D model by using the spatial relationship between the multiple templates known from including and analyzing images in the sequence that contain adjacent pairs of the multiple reference templates.

Accuracy of a 3D model created using this approach is related to the accuracy with which the camera pose is determined using the reference templates, which in turn is related to how big the image of the reference template is on the camera sensor. The precise position of the fiducials on the reference template are more accurately determined when the reference template image occupies a sufficiently large number of pixels. When the scene to be modeled is large, rather than move the camera to a distant position so as to capture the whole scene and a single reference template within its field of view, it is better to move the camera closer to the details of the scene capturing only a portion of the scene in each view. The use of multiple reference templates in this case provides a single template of sufficient size for good accuracy in each partial view of the scene and also enables assembling the partial views into a complete model of the scene. Using multiple templates has an advantage over a system that uses image features to join information from multiple viewpoints in that, by using multiple templates, the data processing needed to establish the camera pose and to handle multiple viewpoints is reduced, and it offers better reliability in scenes that have few recognizable features (e.g. bare walls in a room).

**Figure 27** illustrates an example where multiple templates are employed on a single surface **910, 912, 914** on one wall **902** and **916** and **918** on a second **wall 904. Figure 27** illustrates unique fiducial patterns. It is not necessary that all or any of the patterns be unique. The templates may have a unique code as discussed with respect to **Figure 16** above, or scene features may be used by a spatial relationship engine to related the different pose/position sequences. In an embodiment employing unique templates (unique by pattern or code), each pose position sequence should share one template in common with at least one other pose/position sequence and that all of the pose/position sequences be linked to each other by like a commonality chain. For example, *See* **Figure 28.** Pose/position sequence **920** shares in common a template with pose/position sequence **922** which shares in common a template with pose/position sequence **924** which shares in common a template with pose/position sequence **926.** In alternative embodiments rather then a sequence of templates a single continuous template (not shown) may be employed in this case the common template across multiple pose/position sequences can be a single template (not shown).

**Figure 29** and **Figure 30** show an embodiment where the pose/positions go around an object **930.** The templates **934, 932** and **936** (other templates are on the back side and cannot be seen from the angle shown in **Figure 29. Figure 30** illustrated the six (6) pose/position sequence scans **940, 942, 944, 946, 948** and **950.** In this embodiment the spatial relations engine may use known geometry of the hexagonal pedestal to related the pose/position sequences and it is not necessary that the pose/position sequences be unique or share a common template or have a common template chain.

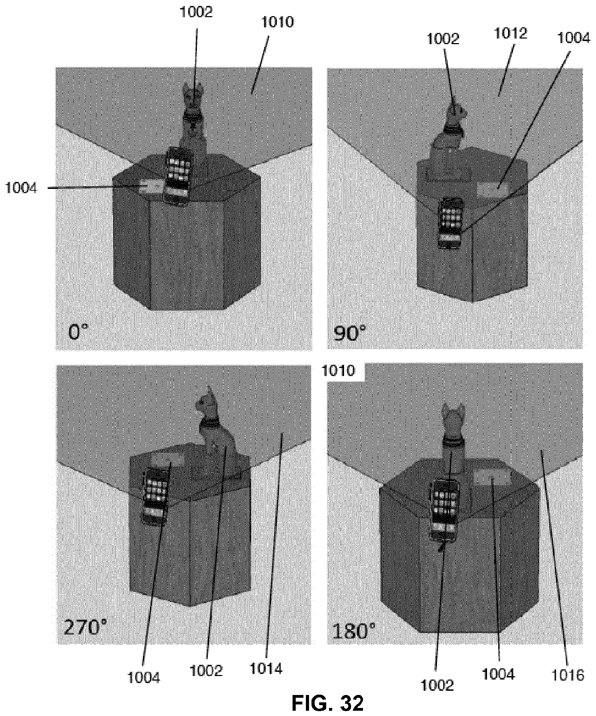

**Figure 32** illustrates an alternative embodiment. Where a single template **1004** is used to combine multiple pose/position sequences **1010, 1012, 1014,** and **1016.** Of this category of embodiment the spatial relation engine takes advantage the fact that a single template is used. **Figure 32** illustrates a special category of the category of embodiment, specifically, where the template has n-fold rotational symmetry. More specifically, **Figure 32** illustrates 4-fold rotational symmetry which means every 90 degrees of rotation there is no variance of the pattern seen. A 6-fold rotational symmetry would allow for the pattern looking the same for every 60 degrees of rotation.

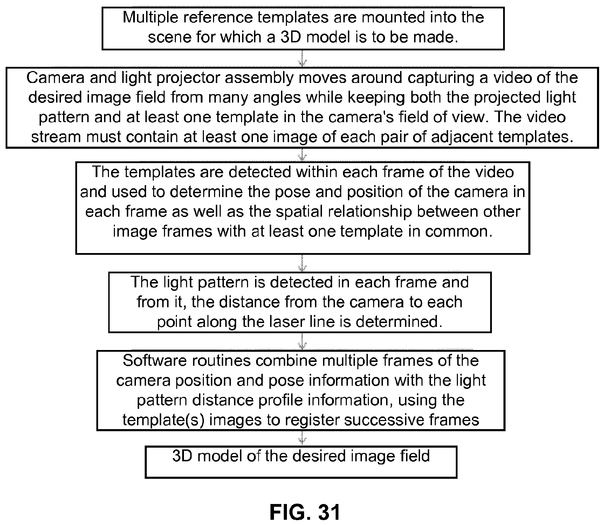

**Figure 31** shows a simplified flowchart of an embodiment of the data processing operation for combining the multiple pose/position sequence image frames into a 3D model.

Step 1: The reference templates are mounted within the scene for which a 3D model is to be made. In **Figure 27** and **Figure 28,** the large templates are used to get a model of the room interior. The small templates are used to get a higher resolution model of an object or region-of-interest within the large scene.

Step 2: The camera captures a sequence of images from a series of pose/positions relative to the scene as the projected light pattern scans a portion of the scene for each pose/position. The pose/positions are chosen so that the whole scene is covered with each pose position covering a portion of the total scene. Each image must also contain the image of at least one reference template. In the embodiment shown each template must be imaged along with an adjacent template at least once, but only one template need appear in most frames. In general, any number of templates may be used in a set where the number of templates is chosen to meet the needs of the scene or object that is to be measured or modeled. Another way to express this is: in this embodiment each template must be a node on a connected graph that includes the fixed/master pose. In other embodiments the spatial relation engine that stitches together information from multiple sequences uses other information as discussed herein.

Steps 3 and 4: The projected light pattern falling onto the scene is detected in each frame of video by the Light Pattern Detection subsystem. Similarly, the reference templates in each video frame are recognized by the Reference Object / Reference Template Recognition Subsystem. This information is passed to the data processing system.

Step 5: The pose and position of the camera for each frame is determined by analyzing the reference template information. Then the projected light points are processed to produce a set of 3D point locations relative to the reference template in each frame. The video frames showing two or more reference templates are analyzed to determine the relative pose and position of each template relative to some fixed point (e.g. the first template imaged). This is used to assemble the 3D points determined from each video frame into a complete model.

Another embodiment of the 3D system is shown in **Figures 27** and **Figure 29.** That is a combination of different template sizes. The purpose of this is to illustrate how larger templates could be used for a larger area and with in that area smaller templates can be used where with in the larger 3D scene there may be interest in an object where greater accuracy is desired. **Figures 27** and **29** are intended inter alia to illustrate how the larger scale scene (walls **902** and **904** and the position of object **930** are known at one level of accuracy and the details of object **930** can be captured at a much higher level of accuracy. Meanwhile the use of multiple pose/position sequences allows for greater accuracy than a single pose/position sequence.

While the disclosure has been described with respect to a limited number of embodiments, those skilled in the art, having benefit of this disclosure, will appreciate that other embodiments may be devised which do not depart from the scope of the disclosure as disclosed herein. The disclosure has been described in detail, it should be understood that various changes, substitutions and alterations can be made hereto without departing from the scope of the disclosure.

**Claims**

1. A 3D mapping device comprising:

a range pattern projector (114, 230, 318, 319) configured to project a ranging pattern;

a camera (112, 240, 316) configured to capture a sequence of images from a sequence of positions and poses relative to an object (12a-d, 930) or a scene to be 3D mapped;

a pose/position measuring engine configured to determine the pose and position of the camera (112, 240, 316) for each of said sequence of images, wherein multiple reference templates (14, 114, 932-936) are located somewhere in each of said images;

a triangulation engine configured to determine the distance of individual points on the object (12a-d, 930) or in the scene to be 3D mapped on which the projector's pattern is projected;

a spatial relationship engine configured to determine the spatial relationship between a first pose/position sequence of images and a second pose/position sequence of images, wherein the first and second sequence share at least one reference template (14, 114, 932-936) in common; and

a mapping engine configured to provide a dimensionally correct 3D map output of the object (12a-d, 930) or the scene based on the input of the pose/positioning measuring engine output and the triangulation engine output and the spatial relationship engine output for multiple pose/position sequences of images.

2. The 3D mapping device of claim 1, wherein the ranging pattern is a line (16) or a pair of crossing lines (15, 16).

3. The 3D mapping device of claim 1 or 2, wherein the origin of the projected pattern is offset by a distance from a central axis of the camera (112, 240, 316) and the range pattern projector (114, 230, 318, 319) has a central axis which is non parallel to the central axis of the camera (112, 240, 316).

4. The 3D mapping device of claim 1, 2 or 3, wherein the range pattern projector (114, 230, 318, 319) is a laser with a diffractive optical element, DOE, mask (182).

5. The 3D mapping device of any of the preceding claims further comprising mapping known distances of objects with the rows and/or columns of pixels on a digital camera scanner where the reflected projected pattern appears.

6. The 3D mapping device of any of the preceding claims, wherein the reference template (14, 114, 932-936) is a physical object with at least four coplanar reference points (142, 191-195) detectable in a digital image.

7. The 3D mapping device of claim 6, wherein the at least four coplanar reference points (142, 191-195) emit light of a frequency or intensity that makes the points more detectable.

8. The 3D mapping device of any of the preceding claims, wherein the reference template (14, 114, 932-936) is projected by a reference template projector.

9. The 3D mapping device of any of the preceding claims, wherein a series of reference templates (14, 114, 932-936) are placed proximate to the object (12a-d, 930) or in the scene to be 3D mapped.

10. The 3D mapping device of any of the preceding claims further comprising of an engine configured to extract real world dimensions from the 3D mapping based on user input of which dimensions are desired.

11. The 3D mapping device of any of the preceding claims, wherein each reference template (14, 114, 932-936) is unique.

12. The 3D mapping device of any of the preceding claims, wherein each reference template (14, 114, 932-936) has a unique code.

13. The 3D mapping device of any of the preceding claims, wherein there is a single reference template with n-fold rotational symmetry.

14. The 3D mapping device of claim 13, wherein the n-fold rotational symmetry is a 4-fold rotational symmetry.

**Patentansprüche**

1. 3D-Abbildungsvorrichtung, die Folgendes umfasst:

einen Entfernungsmusterprojektor (114, 230, 318, 319), der ausgelegt ist zum Projizieren eines Entfernungsmessungsmusters;

eine Kamera (112, 240, 316), die ausgelegt ist zum Aufnehmen einer Folge von Bildern aus einer Folge von Positionen und Posen relativ zu einem Objekt (12a-d, 930) oder einer 3D-abzubildenden Szene;

eine Posen-/Positionsmessengine, die ausgelegt ist zum Bestimmen der Pose und der Position der Kamera (112, 240, 316) für jede aus den Folgen von Bildern, wobei sich mehrere Referenzvorlagen (14, 114, 932-936) irgendwo in jedem der Bilder befinden;

eine Triangulationsengine, die ausgelegt ist zum Bestimmen des Abstands einzelner Punkte auf dem Objekt (12a-d, 930) oder in der 3D-abzubildenden Szene, auf welche das Projektormuster projiziert wird;

eine Raumbeziehungsengine, die ausgelegt ist zum Bestimmen einer räumlichen Beziehung zwischen einer ersten Posen-/Positionsfolge von Bildern und einer zweiten Posen-/Positionsfolge von Bildern, wobei die erste und die zweite Folge mindestens eine gemeinsame Referenzvorlage (14, 114, 932-936) teilen; und

eine Abbildungsengine, die ausgelegt ist zum Liefern einer hinsichtlich Abmessungen korrekten 3D-Ausgabe des Objekts (12a-d, 930) oder der Szene auf der Grundlage der Eingabe der Ausgabe der Posen-/Positionsmessengine und der Ausgabe der Triangulationsengine und der Ausgabe der Raumbeziehungsengine für mehrere Posen-/Positionsfolgen von Bildern.

2. 3D-Abbildungsvorrichtung nach Anspruch 1, wobei das Entfernungsmessungsmuster eine Linie (16) oder ein Paar gekreuzter Linien (15, 16) ist.

3. 3D-Abbildungsvorrichtung nach Anspruch 1 oder 2, wobei der Ursprung des projizierten Musters um einen Abstand von einer Mittelachse der Kamera (112, 240, 316) versetzt ist und der Entfernungsmusterprojektor (114, 230, 318, 319) eine Mittelachse aufweist, welche nicht zur Mittelachse der Kamera (112, 240, 316) parallel ist.

4. 3D-Abbildungsvorrichtung nach Anspruch 1, 2 oder 3, wobei der Entfernungsmusterprojektor (114, 230, 318, 319) ein Laser mit einer diffraktiv-optischen Elementmaske bzw. DOE-Maske (182) ist.

5. 3D-Abbildungsvorrichtung nach einem der vorhergehenden Ansprüche, die ferner Abbilden bekannter Abstände von Objekten mit den Zeilen und/oder Spalten von Pixeln auf einer Digitalscannerkamera, wo das reflektierte projizierte Muster erscheint, umfasst.

6. 3D-Abbildungsvorrichtung nach einem der vorhergehenden Ansprüche, wobei die Referenzvorlage (14, 114, 932-936) ein physisches Objekt mit mindestens vier komplanaren in einem Digitalbild detektierbaren Referenzpunkten (142, 191-195) ist.

7. 3D-Abbildungsvorrichtung nach Anspruch 6, wobei die mindestens vier komplanaren Referenzpunkte (142, 191-195) Licht einer Frequenz oder Intensität emittieren, die die Punkte besser detektierbar macht.

8. 3D-Abbildungsvorrichtung nach einem der vorhergehenden Ansprüche, wobei die Referenzvorlage (14, 114, 932-936) durch einen Referenzvorlagenprojektor projiziert wird.

9. 3D-Abbildungsvorrichtung nach einem der vorhergehenden Ansprüche, wobei eine Serie von Referenzvorlagen (14, 114, 932-936) proximal zum Objekt (12a-d, 930) oder in der 3D-abzubildenden Szene platziert ist.

10. 3D-Abbildungsvorrichtung nach einem der vorhergehenden Ansprüche, die ferner eine Engine umfasst, die ausgelegt ist zum Extrahieren realer Abmessungen aus der 3D-Abbildung auf der Grundlage von Benutzereingaben, welche Abmessungen gewünscht werden.

11. 3D-Abbildungsvorrichtung nach einem der vorhergehenden Ansprüche, wobei jede Referenzvorlage (14, 114, 932-936) einzigartig ist.

12. 3D-Abbildungsvorrichtung nach einem der vorhergehenden Ansprüche, wobei jede Referenzvorlage (14, 114, 932-936) einen einzigartigen Code aufweist.

13. 3D-Abbildungsvorrichtung nach einem der vorhergehenden Ansprüche, wobei es eine einzelne Referenzvorlage mit n-facher Rotationssymmetrie gibt.

14. 3D-Abbildungsvorrichtung nach Anspruch 13, wobei die n-fache Rotationssymmetrie eine 4-fache Rotationssymmetrie ist.

**Revendications**

1. Dispositif de cartographie en 3D comprenant :

un projecteur de motif de portée (114, 230, 318, 319) configuré pour projeter un motif de télémétrie ;
un appareil de prise de vues (112, 240, 316) configuré pour capturer une séquence d'images d'une séquence de positions et de poses par rapport à un objet (12a à 12d, 930) ou une scène à cartographier en 3D ;
un moteur de mesure de pose/position configuré pour déterminer la pose et la position de l'appareil de prise de vues (112, 240, 316) pour chaque image de ladite séquence d'images, dans lequel de multiples modèles de référence (14, 114, 932 à 936) sont situés quelque part dans chaque image desdites images ;
un moteur de triangulation configuré pour déterminer la distance de points individuels sur l'objet (12a à 12d, 930), ou dans la scène à cartographier en 3D, sur lequel le motif du projecteur est projeté ;
un moteur de relation spatiale configuré pour déterminer la relation spatiale entre une première séquence de pose/position d'images et une seconde séquence de pose/position d'images, dans lequel la première et la seconde séquence partagent au moins un modèle de référence (14, 114, 932 à 936) en commun ; et
un moteur de cartographie configuré pour fournir une sortie de carte en 3D aux bonnes dimensions de l'objet (12a à 12d, 930) ou de la scène en se basant sur l'entrée de la sortie de moteur de mesure de pose/positionnement ainsi que sur la sortie de moteur de triangulation et la sortie de moteur de relation spatiale pour de multiples séquences de pose/position d'images.

2. Dispositif de cartographie en 3D selon la revendication 1, dans lequel le motif de télémétrie est une ligne (16) ou une paire de lignes de croisement (15, 16).

3. Dispositif de cartographie en 3D selon la revendication 1 ou 2, dans lequel l'origine du motif projeté est décalée d'une distance par rapport à un axe central de l'appareil de prise de vues (112, 240, 316) et le projecteur de motif de portée (114, 230, 318, 319) comporte un axe central qui n'est pas parallèle à l'axe central de l'appareil de prise de vues (112, 240, 316) .

4. Dispositif de cartographie en 3D selon la revendication 1, 2 ou 3, dans lequel le projecteur de motif de portée (114, 230, 318, 319) est un laser ayant un masque d'élément optique diffractif (DOE) (182).

5. Dispositif de cartographie en 3D selon l'une quelconque des revendications précédentes, consistant en outre à cartographier des distances connues d'objets avec les rangées et/ou les colonnes de pixels sur un scanner d'appareil de prise de vues numérique où le motif projeté réfléchi apparaît.

6. Dispositif de cartographie en 3D selon l'une quelconque des revendications précédentes, dans lequel le modèle de référence (14, 114, 932 à 936) est un objet physique ayant au moins quatre points de référence coplanaires (142, 191 à 195) qui peuvent être détectés dans une image numérique.

7. Dispositif de cartographie en 3D selon la revendication 6, dans lequel les au moins quatre points de référence coplanaires (142, 191 à 195) émettent de la lumière d'une fréquence ou d'une intensité qui rendent les points plus détectables.

8. Dispositif de cartographie en 3D selon l'une quelconque des revendications précédentes, dans lequel le modèle de référence (14, 114, 932 à 936) est projeté par un projecteur de modèle de référence.

9. Dispositif de cartographie en 3D selon l'une quelconque des revendications précédentes, dans lequel une série de modèles de référence (14, 114, 932 à 936) sont placés à proximité de l'objet (12a à 12d, 930) ou dans la scène à cartographier en 3D.

10. Dispositif de cartographie en 3D selon l'une quelconque des revendications précédentes, se composant en outre d'un moteur configuré pour extraire des dimensions de monde réel de la cartographie en 3D en se basant sur une entrée d'utilisateur dont des dimensions sont souhaitées.

11. Dispositif de cartographie en 3D selon l'une quelconque des revendications précédentes, dans lequel chaque modèle de référence (14, 114, 932 à 936) est unique.

12. Dispositif de cartographie en 3D selon l'une quelconque des revendications précédentes, dans lequel chaque modèle de référence (14, 114, 932 à 936) comporte un code unique.

13. Dispositif de cartographie en 3D selon l'une quelconque des revendications précédentes, dans lequel il y a un seul modèle de référence ayant une symétrie de rotation d'ordre n.

14. Dispositif de cartographie en 3D selon la revendication 13, dans lequel la symétrie de rotation d'ordre n est une symétrie de rotation d'ordre 4.

FIG. 1

**FIG. 2**

**FIG. 3**

FIG. 4

**FIG. 5**

**FIG. 6**

**FIG. 7**

**FIG. 8**

FIG. 9

EP 3 069 100 B1

FIG. 10

FIG. 11

23

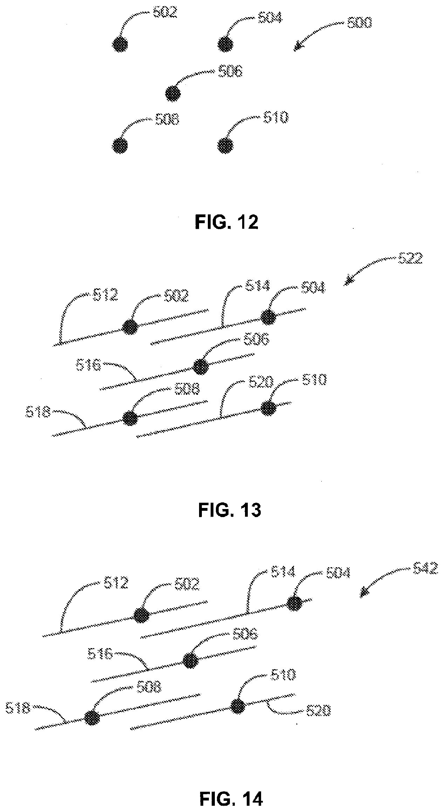

**FIG. 12**

**FIG. 13**

**FIG. 14**

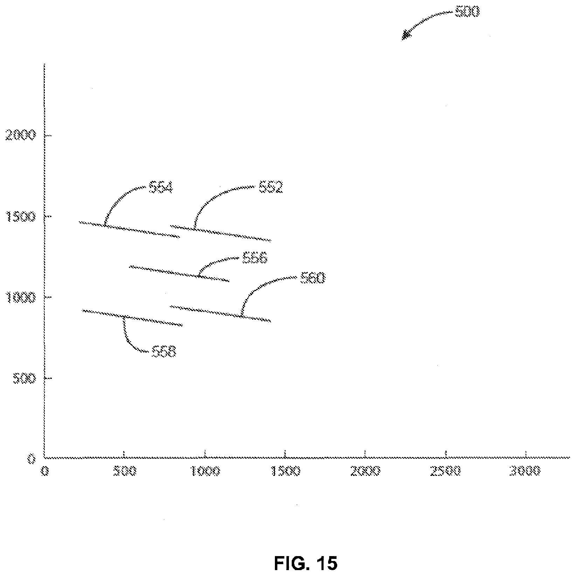

FIG. 15

FIG. 16

**FIG. 17**

Template is mounted within the desired field

Camera and light projector assembly are aimed at the desired image field such that both the projected light pattern and the template are in the camera's field of view

Camera and light projector assembly moves around capturing a video of the desired image field from many angles while keeping both the projected light pattern and the template in the camera's field of view. The projected light pattern should illuminate every point of interest in the scene at some point in the captured image sequence

The template is detected within each frame of the video and is used to determine the pose and position of the camera in each frame

The projected light pattern is detected in each frame and from it the distance from the camera to each point along the laser line is determined using triangulation

Software routines combine multiple frames of the camera position and pose information with the laser distance profile information, using the template image to register successive frames

3D model of the desired image field

FIG. 18

**FIG. 19**

Video sequence containing the desired image field from many angles while keeping both the projected light pattern and the template in the camera's field of view

N frames delay

Frame M

Frame M+N

Template is detected in each image and one of the images is adjusted using an image transformation calculated from the difference in templates so that its template matches that of the unchanged image frame both in position and camera pose

Subtract the adjusted image frame from the unadjusted image frame thereby removing the background image information

The desired laser pattern from the image frame that was not adjusted is given by a pattern of positive valued pixels in the difference image

**FIG. 20**

**FIG. 21**

2D photographic image(s) i.e., one or more images from the sequence captured

3D point cloud

Key points identified by user interactively or automatically using image processing

Key points from the 2D images are located in the 3D point cloud

Local processing of the 3D point cloud at the key locations to smooth data and remove outliers (optional if needed)

Dimensions, areas, angles, and other requested information is extracted from 3D point cloud and displayed to the user

**FIG. 22**

**FIG. 23**

**FIG. 24**

**FIG. 25**

**FIG. 26**

910   912   914   902   916   904   918

**FIG. 27**

920   922

924   926   **FIG. 28**

930

934 **FIG. 29** 932 936

940 930 942 930 930 944

A B C

1,2,4,5,6 1,2,4,5,6 1,2,4,5,6

D E F

1,2,4,5,6 1,2,4,5,6 1,2,4,5,6

930 946 948 930 940 930

**FIG. 30**

Multiple reference templates are mounted into the scene for which a 3D model is to be made.

Camera and light projector assembly moves around capturing a video of the desired image field from many angles while keeping both the projected light pattern and at least one template in the camera's field of view. The video stream must contain at least one image of each pair of adjacent templates.

The templates are detected within each frame of the video and used to determine the pose and position of the camera in each frame as well as the spatial relationship between other image frames with at least one template in common.

The light pattern is detected in each frame and from it, the distance from the camera to each point along the laser line is determined.

Software routines combine multiple frames of the camera position and pose information with the light pattern distance profile information, using the template(s) images to register successive frames

3D model of the desired image field

# FIG. 31

**FIG. 32**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KAWASAKI.** *Entire Model Acquisition System using Handheld 3D Digitizer*